# EUROPEAN PATENT APPLICATION

(11) **EP 2 341 285 A1**
(43) Date of publication of application: **06.07.2011**
(21) Application number: 09171554.0
(22) Date of filing: 29.09.2009
(51) Int. Cl.: F21V 29/02, G03B 21/16, H01J 61/52

(54) **Cooling system for a lamp and lighting system comprising the cooling system**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

The invention relates to a cooling system (100) for a lamp (200), to a lighting system (300) and to a projection system (400) comprising the cooling system. The cooling system according to the invention is configured for generating a first jet (10) of cooling fluid and for generating a second jet (20) of cooling fluid configured for colliding with the first jet of cooling fluid at a distance (d1) from the lamp to generate a combined jet (30) of cooling fluid. A ratio between a first parameter of the first jet and a second parameter of the second jet determines a direction of the combined jet for directing the combined jet to a predefined location (40) on the lamp for cooling the predefined location of the lamp.

The effect of the measures according to the invention is that the ratio between the first parameter and the second parameter is used to determine a direction of the flow of combined jet comprising the combined cooling fluid.

## Description

### FIELD OF THE INVENTION:

The invention relates to a cooling system for a lamp.

The invention also relates to a lighting system comprising the cooling system and to a projection system comprising the lighting system.

### BACKGROUND OF THE INVENTION:

High intensity lamps, such as high pressure discharge lamps or halogen lamps, are known per se. They are often used as high intensity light source in lighting systems, inter alia, in projection systems such as beamers and projection televisions. Such high intensity lamps are also often used in headlight illumination systems, for example, for use in cars and motorcycles. High intensity lamps are also often used in shops and in lighting systems used in a theater or concert for illuminating a part of the stage. Such lamps are typically connected to a base which is a lamp holder for holding the lamp and positioning the lamp inside the lighting system, for example, at a predefined location with respect to additional optics in the lighting system. The base generally comprises supply-pins connected to a power supply for providing electrical power to the high pressure discharge lamp.

Especially when using such high intensity lamps to illuminate a part of a stage, the compactness of the lighting system is important. More compact lighting systems may easily be used in portable lighting system which may be packed and be taken from one stage to another. Furthermore, when the lighting system is more compact it is easier and cheaper to construct a lighting system which can be moved more quickly and which may be directed more quickly from one end of the stage to another.

High intensity lamps are also often used in projecting systems such as in beamers and projection televisions. Also in such systems, compactness is important. Beamers are often taken from one presentation to another by the presenter and as such should preferably be as compact as possible. For televisions, compactness is an important selling item - and as such also for projection televisions.

The high intensity lamp may, for example, be a high pressure discharge lamp. Such high pressure discharge lamp generally has a vessel, also known as burner, and generally comprises two feed-throughs being electrodes which each cut through the discharge vessel. By applying a potential difference between the two electrodes, a discharge arc is produced. The discharge arc ionizes the gas mixture inside the discharge vessel which subsequently emits light. Alternatively, the high intensity lamp may be, for example, a halogen lamp in which the light emitting substance is a filament which glows when current flows through the filament to produce light. The filament is arranged inside a vessel between the two feed-throughs protruding through the vessel.

Part of the dimensions of these high intensity lamps are required to prevent parts of the lamp to become too hot. So, high intensity lamps typically may be made more compact if they are actively cooled. Such active cooling is, for example, known from the Japanese publication JP-6052836 in which a metal halide lamp is disclosed having a blowing pipe at a base of the metal halide lamp which is directed to the upper part of the outside surface of a luminous tube for actively decreasing the temperature of the tube wall.

A disadvantage of the known cooling system is that the exact location on the lamp for cooling cannot be altered.

### SUMMARY OF THE INVENTION:

It is an object of the invention to provide a more flexible cooling system.

According to a first aspect of the invention the object is achieved with a cooling system for a lamp. The cooling system is configured for generating a first jet of cooling fluid and for generating a second jet of cooling fluid configured for colliding with the first jet of cooling fluid at a distance from the lamp to generate a combined jet of cooling fluid. A ratio between a first parameter of the first jet and a second parameter of the second jet determining a direction of the combined jet for directing the combined jet to a predefined location on the lamp for cooling the predefined location of the lamp.

A jet of cooling fluid is an artificially made mass-flow of a cooling medium or agent which typically remains compact and confined for some distance from the part where the jet is generated. Such jet of cooling fluid is often generated by forcing the cooling fluid through an emitter, for example, a nozzle or some kind of pipe or tube emitting the mass-flow constituting the jet of cooling fluid. The cooling fluid may comprise liquid medium used for cooling, gaseous medium used for cooling or a combination of both liquid and gaseous media for cooling. The parameter of the jet of cooling fluid may be used to define the jet. Examples of such parameters are, for example, a density of the mass flow, a mass-flow speed, a diameter of the mass-flow, and a cross-sectional shape of the mass-flow. Also other parameters defining the mass-flow may be used in the ratio to determine the direction of the combined jet, for example, temperature of the cooling medium, pressure in the mass-flow, geometry of the emitter such as the nozzle, pipe or tube from which the jet of cooling fluid is emitted. A further parameter of the jet may, for example, be the angle at which the first jet collides with the second jet.

The effect of the measures according to the invention is that the ratio between the first parameter and the second parameter is used to determine a direction of the flow of the combined jet comprising the combined cooling fluid. As such, the combined jet may be directed to the predefined location on the lamp. The first jet is arranged to collide with the second jet to form the combined jet. Each one of the first jet and the second jet comprise a mass-flow of cooling fluid which combines into a combined mass-flow of cooling fluid constituting the combined jet. To be able to create the combined jet, the first jet and second jet preferably are not to be disturbed before colliding to form the combined jet. Consequently, the collision between the first jet and second jet takes place at a distance from the part of the lamp which has to be cooled. The direction of the combined jet depends on the ratio between the first parameter being a characteristic of the first jet and the second parameter being a characteristic of the second jet. If, for example, the density of the mass-flow in the second jet is larger than the density of the mass-flow in the first jet while the remainder of the characteristics of the first jet and second jet are substantially the same, the direction of the combined jet is more towards the original direction of the second jet. If, on the other hand, the mass-flow speed in the first jet is larger than the mass-flow speed in the second jet while the remainder of the characteristics of the first jet and second jet are substantially the same, the direction of the combined jet may be closer to the original mass-flow of the first jet. Consequently, the ratio between the first parameter and the second parameter determines the direction of the mass-flow of the combined jet. Adapting the first parameter with respect to the second parameter, the direction of the mass-flow of the combined jet may be altered which enables a shift of the combined jet to cool a different location on the lamp, thus improving the flexibility of the cooling system.

A further advantage of the cooling system according to the invention is that the direction of the combined jet may be determined without physically moving the pipe, tube or nozzle from which the mass-flow of cooling fluid is emitted. Typically, if physical movement of the pipe, tube or nozzle is required, the miniaturization of such cooling system is relatively difficult and expensive. Furthermore, a mean-time-between-failure of such physical movement system of the pipe, tube or nozzle is typically relatively short which is directly related to the operational lifetime of the lamp used in the system. In the cooling system according to the invention, the direction of the combined jet may be determined by simply altering the parameters of the first jet with respect to the second jet. This altering of the parameters may be done without physically altering a direction of the pipe, tube or nozzle which significantly increases the mean-time-between-failure and as such improves the operational lifetime of the lamp.

The first jet and/or second jet may be generated via a fluid pump which is connected to a first emitter for emitting the first jet and to a second emitter for emitting the second jet. The first jet and second jet may also be generated by individual fluid pumps such that the operation of the individual fluid pumps may be altered to adapt the ratio between the first parameter and the second parameter. The fluid pump may comprise a ventilator or fan or may comprise a pump to generate the first jet and/or the second jet. The first jet and/or second jet may be a diverting jet which are configured to generate a combined jet after collision.

In an embodiment of the cooling system, the cooling system comprises control means configured for adapting the first parameter and/or the second parameter to adapt the ratio between the first parameter and the second parameter for adapting the direction of the combined jet. An advantage of this embodiment is that the direction in which the combined jet progresses may be altered relatively easily. Consequently, the predefined location on the lamp which requires cooling may be altered. When the high intensity lamp, for example, is a high pressure discharge lamp, the position and/or orientation of the lamp with respect to the local gravity determines the orientation and/or position of the discharge arc inside the high pressure discharge lamp. As the orientation and/or position of the arc determines the location of the hottest point on the lamp, a change of orientation and/or position of the lamp may require the cooling system to direct the combined jet to a different predefined location on the lamp. As the direction of the combined jet being a combination of the first jet and the second jet depends on the ratio of the first parameter of the first jet and the second parameter of the second jet, the direction may be adapted by altering the first parameter and/or second parameter to redirect the combined jet to cool the different predefined location on the lamp. Parameters such as mass-flow speed and mass-flow density may be altered relatively easily. This change of direction already occurs when the ratio of the first parameter and the second parameter is altered. To obtain a change in the ratio, only one of the first parameter or second parameter need to be altered. As such, to obtain an adaptable direction of the combined jet, the control means may be configured for only adapting the first parameter or for only adapting the second parameter. How changes in the first parameter or second parameter influence the level of redirecting of the combined jet may, for example, be listed in a look-up-table from which the control means may determine the required adaptations of the first parameter or second parameter to obtain the required level of redirection to reach the different predefined location by the combined jet. The cooling system according to the invention may comprise storage means or may be connected to storage means where the look-up-table may be stored electronically.

In an embodiment of the cooling system, the cooling system comprises control means configured for adapting the first parameter and/or the second parameter to adapt a combined parameter of the combined jet for determining a cooling efficiency of the combined jet. The cooling efficiency of the combined jet is typically depending on the temperature of the mass-flow of the combined jet, a density of the mass-flow of the combined jet and a speed of the mass-flow of the combined j et, assuming that the direction of the combined jet is towards the predefined location. To alter the combined parameter without altering a direction of the combined jet, typically both the first parameter and the second parameter need to be altered. Consequently, to alter the efficiency of the combined jet, the control means is configured for adapting both the first parameter and the second parameter. If, for example, additional intensity is required from the lamp, additional cooling may be required. This may be temporary or for a longer period of time. To achieve this, the control means may control the first parameter and second parameter to alter the combined parameter to obtain the required level of cooling. How changes in the first parameter and second parameter influence the efficiency of the cooling of the combined jet may again be listed in a look-up-table from which the control means may determine the required adaptations of the first parameter and second parameter to obtain the required level of cooling by the combined jet.

In an embodiment of the cooling system, the control means are configured for determining a position of the predefined location on the lamp, and/or wherein the control means are configured for measuring a temperature of the predefined location on the lamp. As indicated before, when the lamp is a high pressure discharge lamp, the position and/or orientation of the lamp with respect to local gravity determines the location and/or orientation of the discharge in the lamp which determines the location of the hottest point of the lamp. This hottest point typically is the predefined location on the lamp which requires cooling. When the lamp is a movable lamp (e.g. in a movable stage projector) of which the orientation and/or position with respect to local gravity may be changed, the control means may use control-signals from the moving control system of the projector to determine the position of the predefined location on the lamp. For example, a control-signal used to rotate the lamp in a specific direction over a predetermined angle may be used to determine the new position of the predefined location after rotation of the lamp. The first parameter and/or second parameter may be adapted by the control means to redirect the combined means to cool the moved predefined location. The control means may also be configured for measuring the temperature of the predefined location. This measured temperature may be used as a feedback signal to provide an indication whether the current cooling is sufficient to prevent the predefined location to exceed a specific temperature. If the measurements indicate that the current cooling is insufficient, the efficiency of the combined jet may be adapted to correspond to achieve the required temperature. As indicated before, the efficiency of the cooling may be adapted by adapting the temperature of the mass-flow of the combined jet, by adapting the density of the mass-flow of the combined jet, by adapting the mass-flow rate in the combined jet and, for example, by adapting the speed of the mass-flow in the combined jet.

In an embodiment of the cooling system, the cooling system is configured for generating a third jet of cooling fluid configured for colliding with the first jet of cooling fluid and/or with the second jet of cooling fluid at a further distance from the lamp to contribute to the combined jet of cooling fluid, the first jet, second jet and third jet being non-coplanar jets of cooling fluid. In an embodiment of the cooling system, the further distance may correspond to the distance from the lamp or may be different from the distance from the lamp where the first jet collides with the second jet. Non-coplanar jets of cooling fluid are jets of cooling fluid which comprise a mass-flow in a certain direction in which the mass-flow direction of the three jets are not arranged in or parallel to a single plane. An advantage of adding a third jet of cooling fluid is that it allows to move the combined jet not only along a line - as is the case when having two jets colliding and forming the combined jet - but to move the combined jet over a triangular surface in which the corners of the triangular surface correspond to individual contributions of the individual first, second and third jet.

In an embodiment of the cooling system, the first parameter of the first jet and/or the second parameter of the second jet comprise:
a mass-flow density of the cooling fluid, and/or
a mass-flow speed of the cooling fluid, and/or
a mass-flow direction of the cooling fluid, and/or
a diameter of the mass-flow of the cooling fluid constituting the jet, and/or
a shape of the cross-section of the mass-flow of the cooling fluid constituting the jet, and/or
a predefined composition of the mass-flow, and/or
a temperature of the fluid medium in the mass-flow, and/or
a pressure within the emitter for emitting the jet, and/or
a geometry of the emitter and/or
an angle between the first jet and the second jet.

Each of these parameters may be altered to alter a direction of the combined jet. The listed examples of first parameters and/or second parameters may not be complete and the skilled person may select a first parameter of the first jet and/or a second parameter of the second jet not listed above which may still be used to adapt a direction of the combined jet without departing from the scope of the invention. Of course, altering more than one parameter may cause different effects on the combined jet which may even lead to the direction of the combined jet to hardly change. When, for example, the mass-flow of the first jet is altered and the speed of the second jet is altered to a same extend, the overall direction of the combined jet may remain substantially unaltered. If the cooling system also comprises the third jet, also the third parameter may comprise any or all of the listed parameters and may be used to define the final direction of the combined jet.

In an embodiment of the cooling system, the first fluid of the first jet and/or the second fluid of the second jet comprise:
a predefined gas or gas mixture,
a gas comprising a predefined amount of liquid,
ambient air, and/or
moisturized air having a predefined humidity

For the cooling of lamps, the cooling fluid may typically be ambient air, as this is often readily available. Other gases or gas mixtures may be used, for example, when the lamp may be damaged due to a specific substance contained in the ambient air. Using moisturized air or using gas comprising a trace amount of liquid has a benefit that the moisture or liquid evaporates when hitting the lamp which requires additional energy which is additionally extracted from the lamp. As such, using this moisturized air or gas with a trace amount of liquid enhances the efficiency of the cooling of the lamp due to the combined jet. In a lighting system or projection system in which the gas comprising the trace amount of liquid or in which moisturized air is used, preferably means are provided to generate this gas comprising the trace amount of liquid or to generate the moisturized air. In the case of moisturized air, the lighting system or projection system may, for example, comprise extraction means to extract the moisture from the surrounding environment. Such extraction means may, for example, comprise a cold-spot where water from the ambient environment may condense which may subsequently be used to generate the flow of moisturized air. The use of a cooling system in which the cooling fluid constitutes a gaseous fluid comprising a predefined amount of liquid or in which the cooling fluid constitutes moisturized air, of course may be used in any cooling system to enhance the efficiency of the cooling system. To obtain an improvement of the efficiency of the cooling using this gaseous fluid comprising the predefined amount of liquid or using moisturized air having a predefined humidity, it is not essential that the cooling system comprises the first jet and second jet to collide at a distance from the lamp to form the combined jet for cooling the lamp.

In an embodiment of the cooling system, the angle between the first jet of cooling fluid and the second jet of cooling fluid is within a range between 2 and 40 degrees, and/or within a range between 5 and 30 degrees, and/or within a range between 10 and 20 degrees. The same ranges of angles between the orientations of the optional third jet with respect to the first and/or second jet apply. When the angle at which the first jet collides with the second jet increases beyond the 40 degrees, the collision of the first jet with the second jet can hardly form a combined jet as the mass-flow will typically not combine into a combined mass-flow but will uncontrollably scatter from the collision point between the first jet and the second jet. When the angle between the first jet and the second jet at the collision point is too small, the distance over which the combined jet may be altered is very small.

In an embodiment of the cooling system, the cooling system comprises a first emitter for emitting the first jet, the first emitter comprising an actuator for altering a dimension of the first emitter and/or for altering a shape of the first emitter for determining the first parameter of the first jet. The cooling system according to the invention may, of course, also comprise a second emitter for emitting the second jet and/or a third emitter for emitting the third jet. As indicated before, the first, second and third emitter for emitting the first, second and third jet, respectively, may be a first, second or third nozzle, a first, second or third pipe or a first, second or third tube. Each of these first, second and third emitters may comprise an individual actuator for determining the first parameter, second parameter and third parameter, respectively. Each actuator may, for example, be a piezo-actuator which may be used to adapt the dimensions of an opening of the emitter through which the mass-flow constituting the jet of cooling fluid may be emitted and/or may be used to determine a shape of the opening in the emitter. These adaptations of the first emitter and/or the second emitter and/or the third emitter will influence the first parameter of the first jet, the second parameter of the second jet and the third parameter of the third jet, respectively, and consequently will contribute to the redirecting of the combined jet. When, for example, the piezo-actuator reduces the dimensions of the first emitter, while the amount of cooling fluid which is forced through the first emitter is maintained, the pressure and speed with which the first jet is emitted from the first emitter is increased. Also when a cross-sectional shape of the first jet is altered, this altered shape interacts differently with the second jet and/or third jet which may result in a different direction of the combined jet. The cross-sectional shape of the first emitter may, for example, be altered from a circular cross-sectional shape to a more elliptical cross-sectional shape. Again, a look-up table may be used to determine how changes in the first parameter and/or second parameter and/or third parameter influence the combined jet, both in direction and in mass-flow and cooling efficiency. Another example of a measure to change the parameter of a jet is to change the pressure applied by the mass-flow generating apparatus (e.g. the fan or pump) so that the amount and speed of the fluid emanating from the emitter is accordingly changed, with an according influence on the direction of the combined jet.

The invention also relates to a lighting system comprising a lamp and at least one cooling system according to the invention.

In an embodiment of the lighting system, the distance from the lamp at which the first jet is configured to collide with the second jet is equal or larger than 50% of a width of the lamp at the predefined location of the lamp, and/or equal or larger than 100% of the width of the lamp at the predefined location of the lamp, and/or equal or larger than 200% of the width of the lamp at the predefined location of the lamp, the width of the lamp being defined in a direction perpendicular to a symmetry-axis of the lamp. If the cooling system further comprises a third jet, also the distance at which the third jet collides with the first jet and/or second jet is preferably equal or larger than 50% of the width of the lamp at the predefined location of the lamp, and/or equal or larger than 100% of the width of the lamp at the predefined location of the lamp, and/or equal or larger than 200% of the width of the lamp at the predefined location of the lamp. The inventors have found that at a minimum distance of 50% of the width from the lamp, the distance over which the combined jet may be altered by altering the first parameter and/or the second parameter and/or the third parameter is substantial and may cover almost a full width of the lamp at the predefined location. At a larger distance from the lamp, the angle between the first jet and second jet at the collision point may be smaller to still cover almost a full width of the lamp at the predefined location. Such a smaller angle between the first jet and the second jet may be preferred to generate a relatively compact combined jet. The actual distance of the collision point from the lamp will be a compromise to the final geometry of the lighting system and the distance over which the combined jet is required to be moved. When the lamp is a high pressure discharge lamp, the high pressure discharge lamp typically comprises a discharge vessel having a substantially circular cross-section. The predefined location typically is near an equator-plane of the discharge vessel being an imaginary plane arranged perpendicular to the symmetry-axis arranged substantially symmetrical between the two electrodes of the discharge lamp. The location of the predefined location may vary, typically along the outer wall of the discharge vessel intersecting with the equator-plane, depending on the orientation of the high pressure discharge lamp relative to the local gravity field. When the first jet and second jet are arranged to emit the mass-flow of cooling fluid within the equator-plane in which the collision between the first jet and second jet is at the distance from the wall of the discharge vessel according to the current embodiment of the lighting system, and in which the first jet and second jet are arranged on the same side of the lamp a combined jet may be generated which may be moved substantially along the width of the discharge vessel covering half of the outer wall at the equator-plane. Having a similar set of a third jet and fourth jet colliding to produce a further combined jet on the opposite side of the lamp may enable the cooling system to cool the lamp whichever way the lamp may be orientated during operation.

In an embodiment of the lighting system, first jet-generation means are integrated in a base of the lamp for generating the first jet of cooling fluid, the base of the lamp providing mechanical fixation of the lamp in the lighting system and providing electrical connection points for providing power to the lamp. Integrating the jet-generation means in the base of the lamp enables a compact design of the lighting system. Of course, preferably also a second jet-generation means and, if present, also a third jet-generation means may be integrated in the base of the lamp. A further advantage when integrating the jet-generation means inside the base is that no holes are required in additional optical elements, such as collimator or reflective optics which may surround the lamp which consequently prevents loss of light from the lighting system.

The lighting system according to the current embodiment may only comprise a single jet-generation means because this single jet-generation means may be used to generate both the first jet and the second jet. The single jet-generation means may, for example, comprise the first emitter for generating the first jet and the second emitter for generating the second jet. The first emitter and second emitter may again each comprise an actuator for altering a dimension and/or cross-sectional shape of the first emitter and/or second emitter.

In an embodiment of the lighting system, the first jet-generation means comprise a first cavity comprising a movable diaphragm for generating the first jet, the movable diaphragm being configured for forcing the cooling fluid of the first jet through a first emitter for emitting the first jet when the movable diaphragm is moved into the first cavity, the cooling system further comprises a diaphragm-driver for moving the movable diaphragm to generate the first jet. The first jet may be generated, for example, via the first emitter of the first cavity, for example, a first nozzle. However, the first cavity may also comprise the second emitter to generate the second jet from the first cavity, for example, the second nozzle. The dimensions and cross-sectional shape of the first jet and second jet may again be altered via actuators arranged at the first emitter and the second emitter. Using such a system, the full jet-generation means may be integrated in the base of the lamp in the lighting system. No additional connecting pipes or connecting tubes may be necessary to provide cooling fluid to the cooling system to generate the first jet and the second jet. Only by controlling the diaphragm-driver to control the emission of fluid such as air from the first cavity may be sufficient to generate the first jet of cooling fluid and possibly the second jet of cooling fluid to produce the combined jet of cooling fluid to actively and flexibly cool the lamp such that the dimensions of the lamp may beneficially be reduced. Alternatively the base may comprise a second cavity having a second emitter for generating the second jet, for example, via the second nozzle. This second cavity may also comprise a second diaphragm which moves to generate the second jet. Even a third cavity for generating the third jet via a third diaphragm may be present.

In an embodiment of the lighting system, the base comprising a first part for mechanical fixing the base to the lighting system and a second part for mechanical fixing the lamp to the base, wherein outer dimensions of the second part being fully integrated within outer dimensions of the first part. A known base commercially known as "fastfit" base is configured such that the second part extends from the first part. The reason for this extending second part is to ensure that the light source is located away from of the base to limit the heating of the base due to the lamp. The metal base is preferably located away from the lamp in order to prevent excessive heating of the part of lighting system that is in contact with the lamp. Furthermore, this extension is used to position the lamp at a predefined location within the lighting system, for example, at a focal point of a reflector which may be part of the lighting system. Due to the cooling system according to the invention, the extension in the base may be omitted. A first advantage is that the lamp together with the base may be more compact such that the whole lighting system may be produced more compact. This may result in, for example, smaller projection systems which are easier to handle and more convenient as portable projector. Typically the second part is too small to comprise jet-generation means of the cooling system and typically is too small to allow the first jet and second jet to be emitted from the second part. The first part typically is larger and may comprise parts of the cooling system. By fully integrating the second part within the outer dimensions of the first part, the second part does not extend from the first part which prevents the second part to form an obstacle between the first jet, second jet and the lamp. A further advantage is that the distance between the first jet and second jet and the lamp may be reduced which enhances the efficiency of the cooling by the first jet and the second jet.

The invention also relates to a projection system comprising the cooling system according to the invention and/or comprising the lighting system according to the invention.

### BRIEF DESCRIPTION OF THE DRAWINGS:

These and other aspects of the invention are apparent from and will be elucidated with reference to the embodiments described hereinafter.

In the drawings:
Fig. 1 is a lighting system comprising the cooling system according to the invention,
Figs. 2A and 2B is a cross-sectional view and a front view, respectively, of the lighting system comprising the cooling system according to the invention,
Fig. 3 is a cross-sectional view of a further embodiment of the lighting system according to the invention comprising the cooling system according to the invention, and
Figs 4A and 4B show different embodiments of a projection system according to the invention.

The figures are purely diagrammatic and not drawn to scale. Particularly for clarity, some dimensions are exaggerated strongly. Similar components in the figures are denoted by the same reference numerals as much as possible.

### DETAILED DESCRIPTION OF EMBODIMENTS:

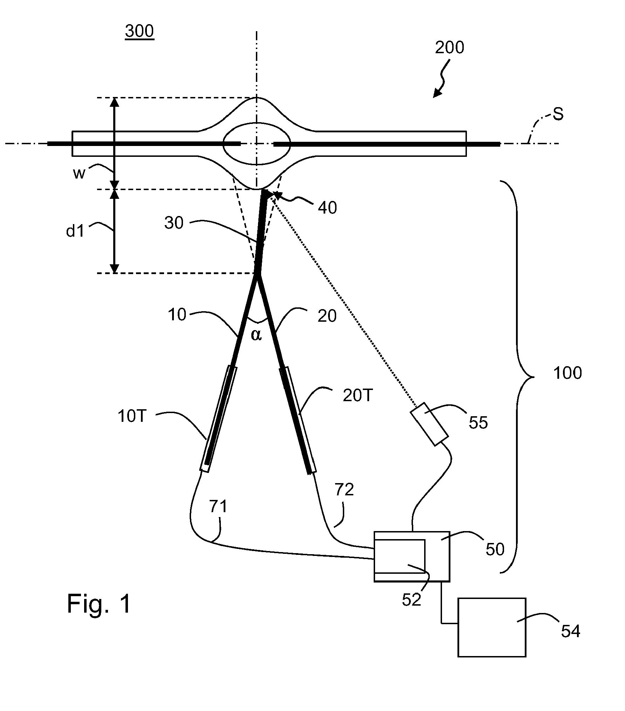

Fig. 1 is a lighting system 300 comprising the cooling system 100 according to the invention. The cooling system 100 as shown in Fig. 1 is configured for generating a first j et 10 of cooling fluid and for generating a second jet 20 of cooling fluid. The first jet 10 and second jet 20 are configured for colliding with each other at a distance d1 from a lamp 200 to generate a combined jet 30 of cooling fluid. A ratio between a first parameter of the first jet 10 and a second parameter of the second jet 20 determine a direction of the combined jet 30. Using a specific first parameter and/or second parameter or by adapting the first parameter with respect to the second parameter a direction of the combined jet 30 may be determined and/or adapted. Consequently, a predefined location 40 on the lamp 200 may be targeted by the combined jet 30 for cooling the predefined location 40 of the lamp 200.

In the embodiment shown in Fig. 1, the first jet 10 emanates from a first tube 10T which is connected via a first connecting tube 71 to control means 50 of the cooling system 100 and the second jet 20 emanates from a second tube 20T which is connected via a second connecting tube 72 to the control means 50. The control means 50 is configured for adapting the first parameter of the first jet 10 and/or for adapting the second parameter of the second jet 20 to adapt the ratio between the first parameter and the second parameter for adapting the direction of the combined jet 30. The first jet 10 and/or second jet 20 may be generated via a fluid pump 52, for example, integrated in the control means 50. Alternatively, the fluid pump 52 may be located outside the control means 50 in which the control means 50 may, for example, be located between the fluid pump 52 and the first tube 10T and second tube 20T. The first jet 10 and second jet 20 may be generated by individual fluid pumps (not shown) or may be generated using a common fluid pump 52. To adapt the first and/or second parameter, for example, a width of the first tube 10T with respect to the second tube 20T may be adapted to determine the direction of the combined jet 30. Actuators (not shown) altering a width of the first tube 10T and/or of the second tube 20T may be present to adapt the first parameter and/or the second parameter, respectively. Such actuators may comprise piezo-actuators which may vary a cross-sectional shape or width of the first tube 10T with respect to the second tube 20T. The fluid pump 52 may comprise a ventilator (not shown) or fan (not shown) or may comprise a pump 52 to generate the fluid flow to generate the first jet 10 and/or the second jet 20.

The first jet 10 is arranged to collide with the second jet 20 to form the combined jet 30. Each one of the first jet 10 and the second jet 20 comprise a mass-flow of cooling fluid which combines into a combined mass-flow of cooling fluid constituting the combined jet 30. To be able to create this combined jet 30, the first jet 10 and second jet 20 preferably are not disturbed before colliding to form the combined jet 30. Consequently, the collision between the first jet 10 and second jet 20 takes place at the distance d1 from the predefined location 40 of the lamp 200 which has to be cooled. The distance d1 from the lamp 200 at which the first jet 10 collides with the second jet 20 is equal or larger than 50% of a width w of the lamp 200 at the predefined location 40. The width w of the lamp 200 is defined in a direction perpendicular to a symmetry-axis S of the lamp 200 which is indicated with a dash-dotted line. The minimum distance of 50% of the width w of the lamp 200 represents a distance over which the combined jet 30 may be moved by altering the first parameter and/or the second parameter. In such an embodiment, the distance over which the combined jet 30 may be moved may cover almost a full width w of the lamp 200 at the predefined location 40. At a larger distance from the lamp 200, the angle α between the first jet 10 and second jet 20 at the collision point may be smaller to still cover almost a full width w of the lamp 200 at the predefined location 40. Such a smaller angle α between the first jet 10 and the second jet 20 is preferred to generate a relatively compact combined jet 30. The actual distance d1 of the collision point from the lamp 200 typically is a compromise to the final geometry of the lighting system 300 and the distance over which the combined jet 30 is required to be moved.

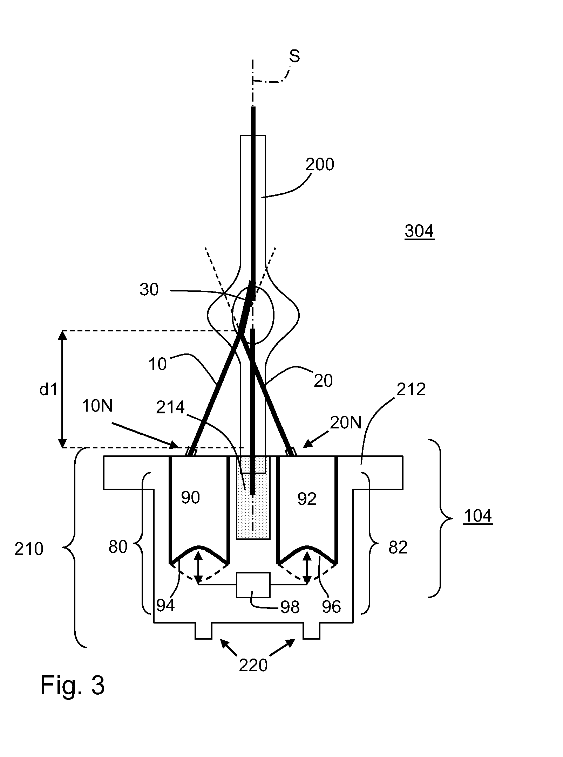

The cooling fluid may comprise liquid medium used for cooling, a gaseous medium used for cooling or a combination of both liquid and gaseous media for cooling. The parameter of the jet 10, 20 of cooling fluid may be used to define the jet 10, 20. Examples of such parameters are, for example, a mass-flow density of the cooling fluid, and/or a mass-flow speed of the cooling fluid, and/or a mass-flow direction of the cooling fluid, and/or a diameter of the mass-flow of the cooling fluid constituting the jet 10, 20, and/or a shape of the cross-section of the mass-flow of the cooling fluid constituting the jet 10, 20, and/or a predefined composition of the mass-flow, and/or a temperature of the fluid medium in the mass-flow, and/or a pressure within an emitter 10T, 20T, 10N, 20N for emitting the cooling fluid such as a tube 10T, 20T and/or nozzle 10N, 20N (see Fig. 3) emitting the jet 10, 20, and/or the geometry of the emitter 10T, 20T, 10N, 20N such as the tube 10T, 20T and/or the nozzle 10N, 20N. Also the angle α between the first jet 10 and the second jet 20 at the collision point determines the direction of the combined jet 30. Also other parameters defining the mass-flow may be used in the ratio to determine the direction of the combined jet 30. If, for example, the density of the mass-flow in the second jet 20 is larger than the density of the mass-flow in the first jet 10 while the remainder of the characteristics of the first jet 10 and second jet 20 are substantially the same, the direction of the combined jet 30 is more towards the original direction of the second jet 20 (not shown). If, on the other hand, the mass-flow speed in the first jet 10 is larger than the mass-flow speed in the second jet 20 while the remainder of the characteristics of the first jet 10 and second jet 20 are substantially the same, the direction of the combined jet 30 may be closer to the original mass-flow of the first jet 10 (as shown in Fig. 1). Thus, adapting the first parameter with respect to the second parameter, the direction of the mass-flow of the combined jet 30 may be altered which enables a shift of the combined jet 30 to cool a different location on the lamp 200, thus improving the flexibility of the cooling system 100.

A further advantage of the cooling system 100 according to the invention is that the direction of the combined jet 30 may be determined without physically moving the first tube 10T and/or the second tube 20T or without physically moving the first nozzle 10N (see Fig. 3) and/or the second nozzle 20N (see Fig. 3) from which the mass-flow of cooling fluid emanates. Moving elements such as a moving first tube 10T and/or second tube 20T may, of course, be present, but using the adaptation of the first parameter and/or second parameter according to the invention enables a moving of the combined jet 30 without the explicit need for moving elements in the cooling system 100 according to the invention. Avoiding physical movement of the tube 10T, 20T or nozzle 10N, 20N typically simplifies the construction of the cooling system 100 and improves the operational life-time of the cooling system 100. Furthermore, the avoiding of physically moving elements of the cooling system 100 to redirect the combined jet 30 eases the miniaturization of such cooling system 100.

The control means 50 are configured for adapting the first parameter and/or the second parameter to adapt the ratio between the first parameter and the second parameter for adapting the direction of the combined jet 30. The control means 50 may be configured for adapting parameters such as mass-flow speed and mass-flow density to alter the direction of the combined jet 30. The control means 50 may be connected to storage means 54 for storing, for example, a look-up-table in which the change in direction of the combined jet 30 may be listed in response to changes in the first parameter or second parameter. The storage means 54 may be part of the cooling system 100 or may be connected to the cooling system 100 via a data link (wireless or wired) to exchange information between the storage means 54 and the cooling system 100.

Additionally, the control means 50 may be configured for adapting the first parameter and/or the second parameter to adapt a combined parameter of the combined jet 30 for determining a cooling efficiency of the combined jet 30. The cooling efficiency of the combined jet 30 is typically also depending on several parameters of the first jet 10 and the second jet 20. For example, the temperature of the mass-flow of the combined jet 30 and/or a density of the mass-flow of the combined jet 30 and/or a speed of the mass-flow of the combined jet 30 determines the cooling efficiency of the combined jet 30. To alter the combined parameter without altering a direction of the combined jet 30, typically both the first parameter and the second parameter need to be altered. Consequently, to alter the efficiency of the combined jet 30, the control means 50 is configured for adapting both the first parameter and the second parameter. If, for example, additional intensity is required from the lamp 200, additional cooling may be required. To achieve this additional cooling, the control means 50 may control the first parameter and second parameter to alter the combined parameter to obtain the required level of cooling. How the changes in the first parameter and second parameter influence the efficiency of the cooling of the combined jet 30 again may be listed in a look-up-table stored in the storage means 54. From this look-up-table, the control means 50 may determine the required adaptations of the first parameter and second parameter to obtain the required level of cooling by the combined jet 30.

The control means 50 may be configured for determining a position of the predefined location 40 on the lamp 200, for example, using a sensor 55 connected to the control means 50. This sensor 55 may also be used as a feedback signal to provide an indication whether the current cooling is sufficient to prevent that the predefined location 40 exceeds a specific temperature. If the measurements by the sensor 55 indicate that the current cooling is insufficient, the efficiency of the combined jet 30 may be adapted to achieve the required cooling efficiency.

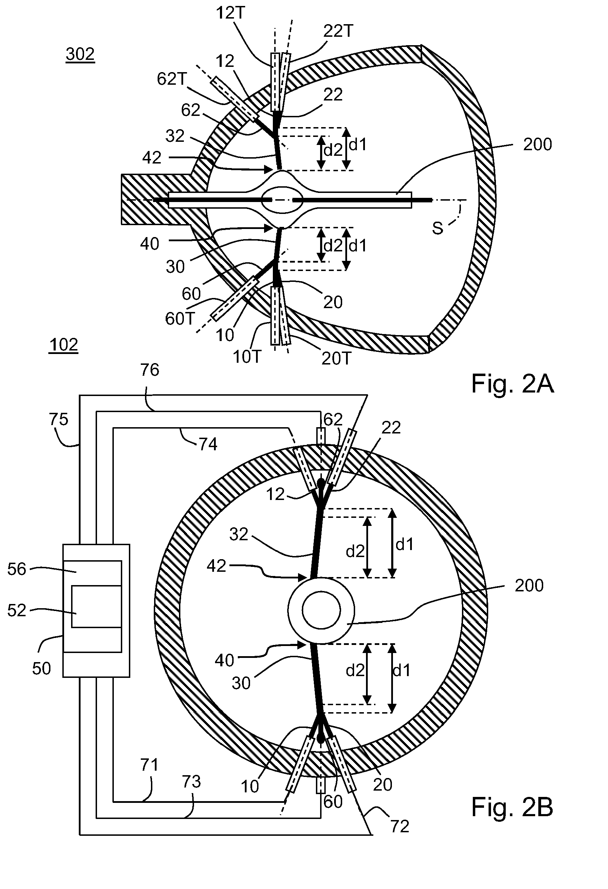

Figs. 2A and 2B are a cross-sectional view and a front view, respectively, of the lighting system 302 comprising the cooling system 102 according to the invention. The cooling system 102 as shown in Figs. 2A and 2B comprises two sets of first jets 10, 12 and second jets 20, 22 which are arranged on opposite side of the lamp 200 and which each are configured for generating a combined jet 30, 32 for cooling the lamp 200. Each of the two combined jets 30, 32 is configured for cooling one half of the lamp 200 on opposite sides of the lamp 200, enabling to cool the lamp 200 on every location around the circumference of the lamp 200. In the embodiment of the cooling system 102 shown in Figs. 2A and 2B, a third jet 60, 62 is present at each set of first jet 10, 12 and second jet 20, 22. The third jet 60, 62 is configured to collide with the first jet 10, 12 and/or with the second jet 20, 22 at a further distance d2 from the lamp 200. The further distance d2 may be equal to the distance d1 from the lamp 200 or may be different from the distance d1 from the lamp 200. The third jet 60, 62 is arranged such that the third jet 60, 62 is not parallel to a surface defined by the first jet 10, 12 and the second jet 20, 22, defining a so called non-coplanar configuration of jets 10, 20, 60 and 12, 22, 62, respectively. Using the third jet 60, 62 as shown in Fig. 2A and 2B the combined jet 30, 32 may be redirected in a direction perpendicular to the imaginary surface (not indicated) defined by the first jet 10, 12 and the second jet 20, 22. An advantage of adding the third jet 60, 62 of cooling fluid is that it allows to move the combined jet 30, 32 not only along a line - as is the case when only having the first jet 10, 12 and the second jet 20, 22 colliding and forming the combined jet 30, 32 - but to move the combined jet 30, 32 over a triangular surface (not indicated) in which the corners of the triangular surface correspond to individual contributions of the individual first jet 10, 12, second jet 20, 22 and third jet 60, 62.

Fig. 2A is a cross-sectional view of the lighting system 302 according to the invention, and Fig. 2B is a front-view of the lighting system 302 according to the invention. At a lower-side of the illustration of the lighting system 302 shown in Figs. 2A and 2B, the first jet 10 is generated via the first tube 10T, the second jet 20 is generated via the second tube 20T and the third jet 60 is generated via the third tube 60T (the labels 10T, 20T, 60T, 12T, 22T and 62T have been omitted in Fig. 2B for clarity reasons, but the labels are similar to the labels provided in Fig. 2A). The first tube 10T is connected via the first connecting tube 71 to the control means 50, and the second tube 20T is connected via the second connecting tube 72 to the control means 50, and the third tube 60T is connected via a third connecting tube 73 to the control means 50. The first jet 10, second jet 20 and third jet 60 at the lower-side of the lighting system 302 as shown in Figs. 2A and 2B collide at a distance d1, d2 from the lamp 200 to form the combined jet 30 impinging on the predefined location 40 on the lamp 200.

At an upper-side of the illustration of the lighting system 302 shown in Figs. 2A and 2B, the first jet 12 is generated via the first tube 12T, the second jet 22 is generated via the second tube 22T and the third jet 62 is generated via the third tube 62T. The first tube 12T at the upper-side is connected via a fourth connecting tube 74 to the control means 50, and the second tube 22T at the upper-side is connected via the fifth connecting tube 75 to the control means 50, and the third tube 62T at the upper-side is connected via a sixth connecting tube 76 to the control means 50. The first jet 12, second jet 22 and third jet 62 at the upper-side of the lighting system 302 as shown in Figs. 2A and 2B collide at a distance d1, d2 from the lamp 200 to form the combined jet 32 impinging on the predefined location 42 on the lamp 200. The use of upper-side of the lighting system 302 and lower-side of the lighting system 302 is only used here to indicate the location of the jets 10, 12, 20, 22, 30, 32 60, 62 in the drawing.

The control means 50 as shown in Fig. 2B comprises the fluid pump 52 pumping a gaseous fluid, for example, air, and further comprises moisturizing means 56 for moisturizing the gaseous fluid to generate, for example, moisturized air. The moisturizing means 56 may, for example, comprise extraction means (not shown) to extract the moisture from the surrounding environment. Such extraction means may, for example, comprise a cold-spot (not shown) in the moisturizing means 56 where water from the ambient environment may condense which may subsequently be used to generate the flow of moisturized air. The moisturizing means 56 may generate a gaseous flow of cooling fluid comprising a specific amount of liquid. A specific example of such gaseous flow having a specific amount of liquid may, for example, be a flow of moisturized air having a predefined humidity. When using moisturized air or using gas comprising a trace amount of liquid the efficiency of the cooling system 102 is improved. The moisture or liquid in the jet of cooling fluid evaporates when hitting the lamp 200 which requires additional energy which is additionally extracted from the lamp 200.

Fig. 3 is a cross-sectional view of a further embodiment of the lighting system 304 according to the invention comprising the cooling system 104 according to the invention. In the embodiment of the lighting system 304 shown in Fig. 3, first jet-generation means 80 are integrated in a base 210 of the lighting system 304 for generating the first jet 10 of cooling fluid, the base 210 of the lighting system 304 providing mechanical fixation of the lamp 200 in the lighting system 304 and provides mechanical fixation of the lighting system 304 in, for example, a luminaire (not shown). The base 210 further provides electrical connection points 220 for providing power to the lamp 200. Integrating the jet-generation means 80 in the base 210 of the lighting system 304 enables a compact design of the lighting system 304. Of course, preferably also a second jet-generation means 82 and, if possible, also a third jet-generation means (not shown) may be integrated in the base 210 of the lighting system 304. A further advantage when integrating the jet-generation means 80, 82 inside the base 210 is that no holes are required in additional optical elements (not shown), such as collimator or reflective optics which may surround the lamp 200. This omission of holes in the additional optical element consequently prevents loss of light from the lighting system 304.

The lighting system 304 according to the current embodiment may comprise a single jet-generation means 80 because this single jet-generation means 80 may be used to generate both the first jet 10 and the second jet 20. The single jet-generation means 80 may, for example, comprise the first nozzle 10N for generating the first jet 10 and the second nozzle 20N for generating the second jet 20 in which both the first nozzle 10N and the second nozzle 20N are connected to the same single jet-generation means 80. The first nozzle 10N and second nozzle 20N may again each comprise an actuator (not shown) for altering a dimension and/or cross-sectional shape of the first nozzle 10N and/or second nozzle 20N to alter the first parameter and/or the second parameter.

The first jet-generation means 80 may, for example, comprise a first cavity 90 comprising a movable diaphragm 94 for generating the first jet 10. The second jet-generation means 82 may, for example, comprise a second cavity 92 comprising a movable diaphragm 96 for generating the second jet 20. The movable diaphragm 94, 96 forces the cooling fluid out of the cavity 90, 92 to generate the jet 10, 12. The cooling system 104 as shown in Fig. 3 further comprises a diaphragm-driver 98 for moving the movable diaphragm 94, 96 to generate the first jet 10 and/or the second jet 20. The first jet 10 may be generated, for example, via the first nozzle 10N of the first cavity 90. However, the first cavity 90 may also comprise the second nozzle 20N to generate the second jet 20 from the first cavity 90 (this is not shown in Fig. 3). The dimensions and cross-sectional shape of the first jet 10 and second jet 20 may again be altered via actuators (not shown) arranged at the first nozzle 10N and the second nozzle 20N or may be used by adapting, for example, a force with which the movable diaphragm 94, 96 is forced into the first cavity 90 and/or the second cavity 92 to generate the first jet 10 and/or the second jet 20. Using such a system, the full jet-generation means 80, 82 are integrated in the base 210 of the lighting system 304. No additional pipes or tubes may be necessary to provide cooling fluid to the lamp 200. Only by controlling the diaphragm-driver 98 to control the emission of fluid such as air from the first cavity 90 and/or from the second cavity 92, the first jet 10 of cooling fluid and the second jet 20 of cooling fluid are generated to produce the combined jet 30 of cooling fluid to actively and flexibly cool the lamp 200 such that the dimensions of the lamp 200 may beneficially be reduced.

The base 210 as shown in Fig. 3 comprises a first part 212 for mechanical fixing the base 210 of the lighting system 304 to, for example, the luminaire, and comprises a second part 214 for mechanical fixing the lamp 200 to the base 210. The outer dimensions of the second part 214 are fully integrated within outer dimensions of the first part 212. In a commercially available base (commercially known as "fastfit" base), the second part extends from the first part to ensure that the lamp 200 is located away from of the base to limit the heating of the base due to the lamp and to position the lamp 200 at a predefined location within the luminaire, for example, at a focal point of a reflector. However, due to the cooling system 102 according to the invention in the lighting system 304 according to the invention, the extension in the base may be omitted - as is shown in Fig. 3. The base 210 according to the invention is more compact such that the whole lighting system 304 may be produced more compact. Furthermore, an extending second part may obstruct the flow of the first jet 10 and second jet 20 to form the third jet 30 to cool the lamp 200. Consequently, by omitting the need of the extension, the cooling via the first jet 10 and second jet 20 may be improved.

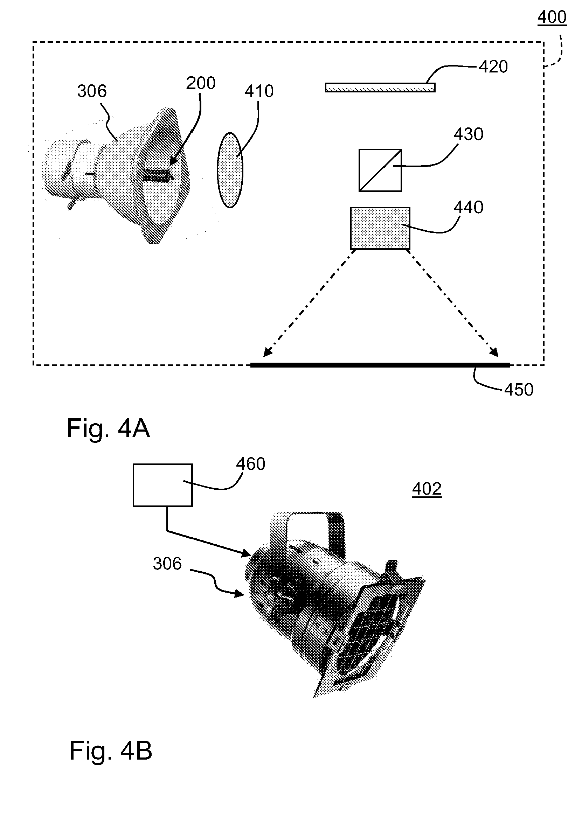

Figs 4A and 4B show different embodiments of a projection system 400, 402 according to the invention. The projection system 400 shown in Fig. 4A is an image projection system 400 and comprises the lighting system 306. The lighting system 306 comprises a high pressure discharge lamp 200 and a cooling system 102 (not indicated) according to the invention. The image projection system 400 may, for example, be a beamer 400 or a projection television 400. Alternatively, the image projection system 400 may be a rapid prototyping system (3D printers) or a lithography system 400. The high pressure discharge lamp 200 may easily be replaced by the halogen lamp (not shown) according to the invention. The image projection system 400 comprises a shaping lens 410 for shaping the light emitted from the high pressure discharge lamp 200 or halogen lamp to illuminate a digital light processor 420 via a beam splitting cube 430. The modulated reflected light from the digital light processor 420 is subsequently imaged via a projection lens 440 on to a screen 450. Alternatively, the image projection system 400 may use a liquid crystal display module (not shown), for example, which is used as a light valve in transmission.

In the currently known projection systems 400 the dimensions of the lighting system 306 are considerable compared to the dimensions of the whole projection system 400, especially when the projection system 400 is a beamer 400. To further reduce the dimensions of such projection system 400, the dimensions of the lamp 200 used and subsequently the collimating optics surrounding the lamp 200 may be reduced. Such a reduction of the dimensions of the lamp 200 of course may not reduce the light power emitted from the lamp 200. As a consequence, good cooling of the lamp 200 using the cooling system 100, 102, 104 according to the invention is required. Due to the fact that the orientation of the lamp 200 in, for example, the beamer 400 may be different, the localized cooling to ensure that the temperature of the lamp 200 does not exceed a certain limit preferably is flexible. In the cooling system 100, 102, 104, the direction of the combined jet may be adapted by adapting the first parameter of the first jet 10, 12 and/or by adapting the second parameter of the second jet 20, 22 and/or by adapting the third parameter of the third jet 60, 62. Consequently, the direction and the position on the lamp 200 of the combined jet 30, 32 may be adapted by adapting any of the parameters of the individual jets 10, 12, 20, 22, 60, 62 of the cooling system 100, 102, 104. This may result in a cooling system 100, 102, 104 in which the direction of the combined jet 30, 32 may be altered without requiring movable parts. Simply altering the first parameter and/or the second parameter and/or the third parameter may alter the direction of the combined jet 30, 32.

The projection system 402 shown in Fig. 4B is a stage projection system 402 which is preferably a movable stage projection system 402. Such movable stage projection system comprises move-control means 460 for controlling the movement of the movable stage projection system 402. This move-control means 460 may provide the control signals (not shown) for controlling the movement of the movable stage projection system 402 to the control means 50 (see Figs. 1 and 2) of the cooling system 100, 102, 104. The control means 50 of the cooling system 100, 102, 104 may use the received control signals to predict how the predefined location 40, 42 of the lamp 200 which has to be cooled will move inside the lamp 200. When the lamp 200, for example, is a high pressure discharge lamp 200, the predefined location 40, 42 on the lamp 200 represents a hot-spot 40, 42 on the lamp 200 which is caused by the presence of the discharge near the hot-spot 40, 42 inside the high pressure discharge lamp 200. Due to the moving of the lamp 200, the position of the hot-spot 40, 42, and consequently the position which has to be cooled on the lamp 200 moves. To ensure that the temperature of the hot-spot 40, 42 does not exceed a predefined level, the combined jet 30, 32 should also move together with the moving hot-spot 40, 42. Using a movable nozzle (not shown) might limit the miniaturization of the projection system 402 and/or may limit the mean-time-between-failure, because of the mechanical movable elements. In the cooling system 100, 102, 104 according to the invention the combined jet 30, 32 may be moved without mechanical moving parts by simply adapting the first parameter and/or the second parameter and/or the third parameter. The adaptation of the first parameter and/or the second parameter and/or the third parameter may be controlled by the received control signals from the move-control means 460 which may require some kind of conversion to ensure that the predefined location 40, 42 which is cooled by the combined jet 30, 32 follows the predicted change of the predefined location 40, 42 due to the movement of the stage projection system 402.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage.

## Claims

1. A cooling system (100, 102, 104) for cooling a lamp (200), the cooling system (100, 102, 104) being configured for generating a first jet (10, 12) of cooling fluid and for generating a second jet (20, 22) of cooling fluid configured for colliding with the first jet (10, 12) of cooling fluid at a distance (d1, d2) from the lamp (200) to generate a combined jet (30, 32) of cooling fluid, a ratio between a first parameter of the first jet (10, 12) and a second parameter of the second jet (20, 22) determining a direction of the combined jet (30, 32) for directing the combined jet (30, 32) to a predefined location (40, 42) on the lamp (200) for cooling the predefined location (40, 42) of the lamp (200).

2. The cooling system (100, 102, 104) according to claim 1, wherein the cooling system (100, 102, 104) comprises control means (50) configured for adapting the first parameter and/or the second parameter to adapt the ratio between the first parameter and the second parameter for adapting the direction of the combined jet (30, 32).

3. The cooling system (100, 102, 104) according to claim 1, wherein the cooling system (100, 102, 104) comprises control means (50) configured for adapting the first parameter and/or the second parameter to adapt a combined parameter of the combined jet (30, 32) for determining a cooling efficiency of the combined jet (30, 32).

4. The cooling system (100, 102, 104) according to claim 2 or 3, wherein the control means (50) are configured for determining a position of the predefined location (40, 42) on the lamp (200), and/or wherein the control means (50) are configured for measuring a temperature of the predefined location (40, 42) on the lamp (200).

5. The cooling system (100, 102, 104) according to claim 1, wherein the cooling system (100, 102, 104) is configured for generating a third jet (60, 62) of cooling fluid configured for colliding with the first jet (10, 12) of cooling fluid and/or with the second jet (20, 22) of cooling fluid at a further distance (d2) from the lamp (200) to contribute to the combined jet (30, 32) of cooling fluid, the first jet (10, 12), second jet (20, 22) and third jet (60, 62) being non-coplanar jets of cooling fluid.

6. The cooling system (100, 102, 104) according to claim 1, wherein the first parameter of the first jet (10, 12) and/or the second parameter of the second jet (20, 22) comprise:
a mass-flow density of the cooling fluid, and/or
a mass-flow speed of the cooling fluid, and/or
a mass-flow direction of the cooling fluid, and/or
a diameter of the mass-flow of the cooling fluid constituting the jet (10, 12, 20, 22, 60, 62), and/or
a shape of the cross-section of the mass-flow of the cooling fluid constituting the jet (10, 12, 20, 22, 60, 62), and/or
a predefined composition of the mass-flow, and/or
a temperature of the fluid medium in the mass-flow, and/or
a pressure within an emitter (ION, 20N, 10T, 12T, 20T, 22T, 60T, 62T) for emitting the jet (10, 12, 20, 22, 60, 62), and/or
a geometry of the emitter (ION, 20N, 10T, 12T, 20T, 22T, 60T, 62T), and/or
an angle (α) between the first jet (10, 12) and the second jet (20, 22).

7. The cooling system (100, 102, 104) according to claim 1, wherein the first fluid of the first jet (10, 12) and/or the second fluid of the second jet (20, 22) comprise:
a predefined gas or gas mixture,
a gas comprising a predefined amount of liquid,
ambient air, and/or
moisturized air having a predefined humidity.

8. The cooling system (100, 102, 104) according to claim 1, wherein an angle (α) between the first jet (10, 12) of cooling fluid and the second jet (20, 22) of cooling fluid is within a range between 2 and 40 degrees, and/or within a range between 5 and 30 degrees, and/or within a range between 10 and 20 degrees.

9. The cooling system (100, 102, 104) according to claim 1, wherein the cooling system (100, 102, 104) comprises a first emitter (10N, 20N, 10T, 12T, 20T, 22T, 60T, 62T) for emitting the first jet (10, 12), the first emitter (10N, 20N, 10T, 12T, 20T, 22T, 60T, 62T) comprising an actuator for altering a dimension of the first emitter (ION, 20N, 10T, 12T, 20T, 22T, 60T, 62T) and/or for altering a shape of the first emitter (ION, 20N, 10T, 12T, 20T, 22T, 60T, 62T) for determining the first parameter of the first jet (10, 12).

10. A lighting system (300, 302, 304, 306) comprising a lamp (200) and at least one cooling system as claimed in claim 1.

11. The lighting system (300, 302, 304, 306) according to claim 10, wherein the distance (d1) from the lamp (200) at which the first jet (10, 12) is configured to collide with the second jet (20, 22) is equal or larger than 50% of a width (w) of the lamp (200) at the predefined location (40, 42) of the lamp (200), and/or equal or larger than 100% of the width of the lamp at the predefined location of the lamp, and/or equal or larger than 200% of the width of the lamp at the predefined location of the lamp, the width (w) of the lamp (200) being defined in a direction perpendicular to a symmetry-axis (S) of the lamp (200).

12. The lighting system (300, 302, 304, 306) according to claim 10, wherein first jet-generation means (80) are integrated in a base (210) of the lamp (200) for generating the first jet (10, 12) of cooling fluid, the base (210) of the lamp (200) providing mechanical fixation of the lamp (200) in the lighting system (300, 302, 304, 306) and providing electrical connection points (220) for providing power to the lamp (200).

13. The lighting system (300, 302, 304, 306) according to claim 12, wherein the first jet-generation means (80) comprise a first cavity (90) comprising a movable diaphragm (94) for generating the first jet (10, 12), the movable diaphragm (94) being configured for forcing the cooling fluid of the first jet through a first emitter (10N, 20N, 10T, 12T, 20T, 22T, 60T, 62T) for emitting the first jet (10, 12) when the movable diaphragm (94) is moved into the first cavity (90), the cooling system (100, 102, 104) further comprises a diaphragm-driver (98) for moving the movable diaphragm (94) to generate the first jet (10, 12).

14. The lighting system (300, 302, 304, 306) according to claim 12, the base (210) comprising a first part (212) for mechanical fixing the base (210) to the lighting system (300, 302, 304, 306) and a second part (214) for mechanical fixing the lamp (200) to the base (210), wherein outer dimensions of the second part (214) being fully integrated within outer dimensions of the first part (212).

15. Projection system (400, 402) comprising the cooling system (100, 102, 104) as claimed in claim 1 and/or comprising the lighting system (300, 302, 304, 306) as claimed in claim 10.
